## Europäisches Patentamt

(19) **European Patent Office**

**Office européen des brevets**

(11) Publication number: **0 151 432**
**B1**

(12) # EUROPEAN PATENT SPECIFICATION

(45) Date of publication of the patent specification:
15.07.87

(51) Int. Cl.⁴: **B 65 D 88/30,** B 60 P 1/64

(21) Application number: 85100652.8

(22) Date of filing: 23.01.85

(54) **Elongate, transportable unit standing upright during use.**

(30) Priority: **04.02.84 NL 8400354**

(43) Date of publication of application:
**14.08.85 Bulletin 85/33**

(45) Publication of the grant of the patent:
**15.07.87 Bulletin 87/29**

(84) Designated Contracting States:
**AT BE CH DE FR GB IT LI LU NL SE**

(56) References cited:
**DE - A - 3 049 152**
**US - A - 2 361 110**

(73) Proprietor: **Beleggingsmaatschappij de Ark B.V.,**
**Postbus 2 Gezellenstraat 21, NL-3860 AA Nijkerk (NL)**

(72) Inventor: **van den Pol, Aart Antonie, Coltoflaan 10,**
**NL-3862 AG Nijkerk (NL)**

(74) Representative: **Noz, Franciscus Xaverius, Ir. et al,**
**Boschdijk 155 P.O. Box 645, NL-5600 AP Eindhoven (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

## Description

The invention relates to a known apparatus which stands upright during use and which is transported in a horizontal position on a vehicle provided with:

a) a loading bridge which is pivotable back and forth between a horizontal transport position and a tilted loading position about a pivot axis which is located near the rear end of the vehicle and which extends horizontally and transversely of the longitudinal axis of the vehicle and

b) a flexible, linear force transmission means for loading the apparatus onto the loading bridge and for unloading the apparatus from the loading bridge, said apparatus comprising:

i) an elongated unit having a longitudinal axis;

ii) a frame mounting said elongated unit, said frame holding said elongated unit in an upright position during use of said elongated unit.

Elongated, transportable units standing upright during use, for example silos or the like are in view of their length usually transported in lying position on a vehicle, for example a van, so that during loading and/or unloading of the transportable unit it is necessary to tilt the unit through an angle of 90°. So generally such elongated units are loaded on a vehicle by means of a crane which is expensive and timeconsuming.

From Dutch patent specification 167.635 is known a vehicle provided with a loading bridge which can be turned about a pivot axis located near the rear end of the chassis of the vehicle and extending horizontally and transversely of the longitudinal axis of the vehicle. There is provided a hook-like coupling member which can be coupled with the end of a unit to be transported, standing on the ground, so that the end of the unit can be drawn-up with the aid of the hook, after which the unit can be drawn onto the loading bridge in the direction of its longitudinal axis, so that the final position of said unit on the vehicle is the same as on the ground.

The invention has for its object to design an elongated, transportable unit standing upright during use in a manner such, that it can also be loaded on and transported with the aid of such a vehicle having a pivotable loading bridge, so that during loading the unit is automatically tilted through an angle of 90°.

According to the invention this is obtained by an apparatus of the kind set forth, comprising:

a) an arm:
having a first end and a second end,
the first end of said arm being mounted on said frame for pivotal movement about an axis which is at least substantially horizontal when said elongated unit is in its upright position.
the second end of said arm being provided with coupling means for coupling said arm to the flexible, linear force transmission on the vehicle,
said arm being pivotal back and forth through at least approximately 180° with respect to the elongated unit (1, 2) between a first position which said arm assumes when said elongated unit is in its upright position and a second position which said arm assumes when said elongated unit is in its horizontal position and said arm being sized, shaped and positioned, so that:

A) when said elongated unit is in its upright position and said arm is in its first position, the second end of said is within 2m of the ground;

B) as said elongated unit is moved from its upright position to its horizontal position, said arm pivots through at least approximately 180° with respect to the elongated unit (1, 2) from its first position to its second position; and

C) when said elongated unit is in its horizontal position and said arm is in its second position, the second end of the arm is located near the top of said elongated unit; and

b) a stop which prevents motion of said arm beyond its second position.

With the construction embodying the invention, when the transportable unit is standing on the ground in its position of use, the free end of the pivotable arm will be turned downwards, so that this end lies within easy reach of a person for coupling the hook-like coupling member with the end of the arm, when the vehicle concerned is standing near the transportable unit. Subsequently the hook-like coupling member can be displaced in the conventional manner along the tilted loading bridge towards the front end thereof, whereby the arm will be pivoted automatically with respect to the transportable unit and so the transportable unit will be tilted into a position in which the transportable unit lies on the loading bridge and can be displaced along the loading bridge into a position suitable for transport.

It is noted that from the published German patent application 3 049 152 is known a container which can be used in combination with a vehicle having a pivotable arm with a hook for drawing the container on the fixed horizontal loading bridge of the vehicle, so that on the vehicle the container has the same position as on the ground.

The open top of such a container lies at a relatively low level when the container stands on the ground as manually loading of the container via the open top has to be possible. On the front end of the container has been provided a short arm pivotable about a horizontal shaft. When the container has to be moved by the pivotable arm of the vehicle, the arm is fixed with respect to the container in an upwardly extending position. The arm has been mounted so as to be pivotable only in view of the possibility of nesting of several containers into each other. Howerer reference does not give any indication with respect to loading a unit which for transport has to be tilted over 90°.

The invention will be described more fully with reference to the accompanying drawings schematically showing a transportable unit embodying the invention and the manner in which such a unit can be loaded on or unloaded from a vehicle.

Fig. 1 is a side elevation of a transportable unit embodying the invention and schematically shows a vehicle arranged near said unit.

Figs. 2 and 3 are side elevations like Fig. 1 in given stages of the disposition of the transportable unit on the loading bridge.

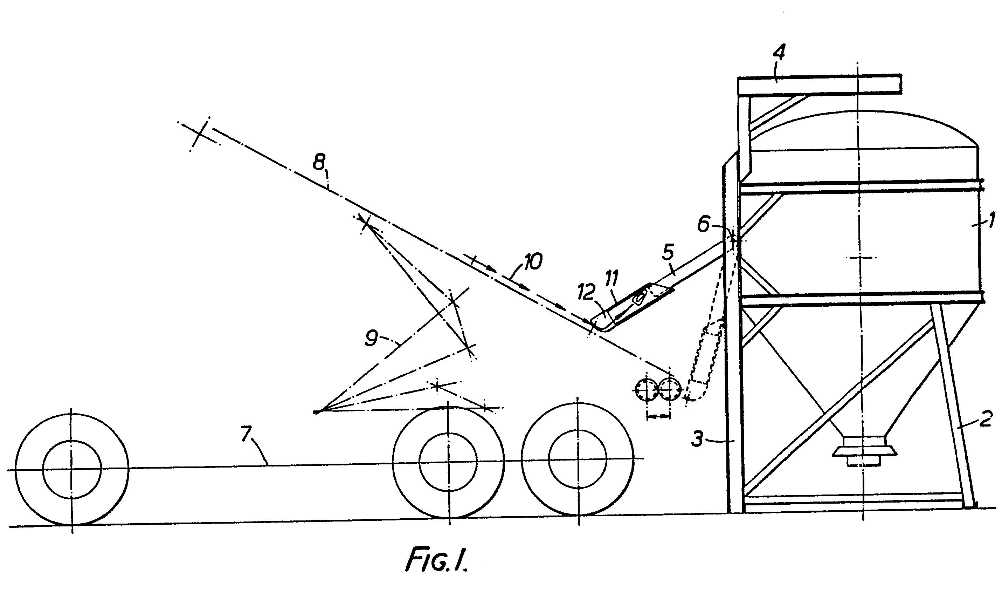

In the embodiment shown, the transportable unit is formed by a silo 1 intended to store, for example, cement and supported by a frame 2, so that in the position of use of the silo shown in Fig. 1 the longitudinal axis of the silo is vertical. The frame 2 comprises two frame beams 3 located near one side of the silo and being vertical in the position of use shown in Fig. 1. A support 4 is fastened to the top ends of the frame beams 3.

Between the frame beams 3 is coupled the end of an arm 5 with the aid of a pivotal shaft 6.

The transportable unit shown can be transported by means of a vehicle 7 schematically shown in the figure of the kind described in Dutch patent specification 167 535. This vehicle is provided with a loading bridge 8, which can be turned with respect to the chassis of the vehicle 7 about a pivotal shaft located near the rear side of the chassis and extending horizontally at right angles to the direction of length of the vehicle with the aid of a setting mechanism 9.

As described in said Dutch Patent Specification a cable or chain portion 10 is displaceable in the direction of length of the loading bridge 8, whilst a hooklike coupling member is fastened to the end of said chain portion. This look-like coupling member can be coupled with the aid of coupling means (not shown in detail) in the hollow end 11 of the arm 5, whilst the chain 10 is guided in the manner shown in Fig. 1 along a guide 12 fastened to the free end of the arm and extending transversely of the longitudinal axis of the arm.

When the unit formed in this case by the silo 1 and the frame 2 supporting the silo has to be transported, the vehicle 7 can be driven backwards towards the silo and the end of the chain 10 can be coupled with the pivotable arm 5, which is turned downwards into the position indicated by broken lines in Fig. 1, so that a person standing on the ground can readily hook the end of the chain 10 to the free end of the arm 5 in the manner illustrated in Fig. 1. By subsequently moving the chain 10 with the aid of means (not shown) upwards along the loading bridge 8, the arm 5 is turned out of the extreme right-hand position indicated by broken lines in Fig. 1 into the position indicated by solid lines in Fig. 1.

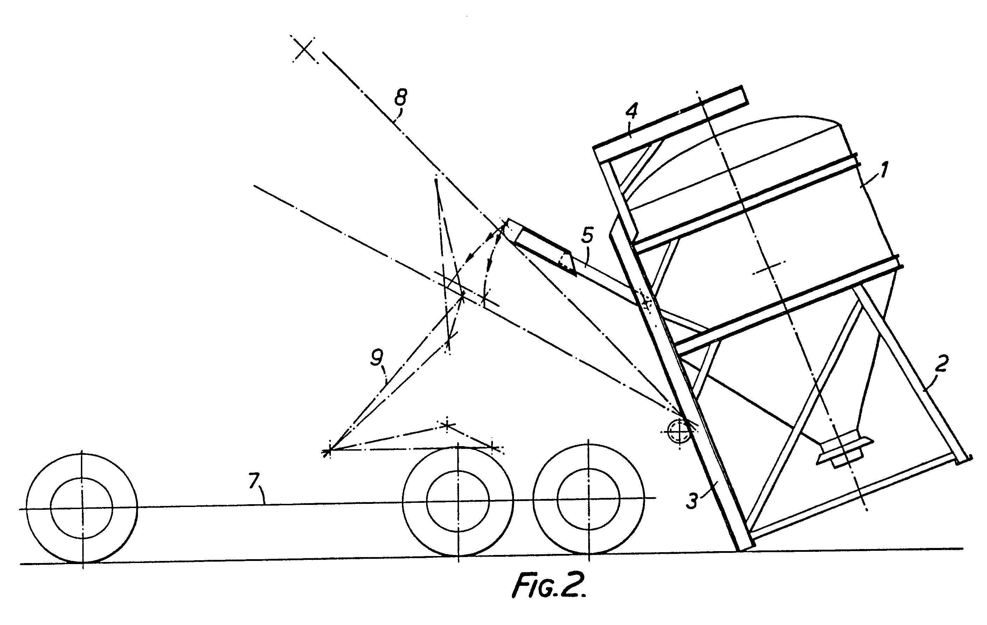

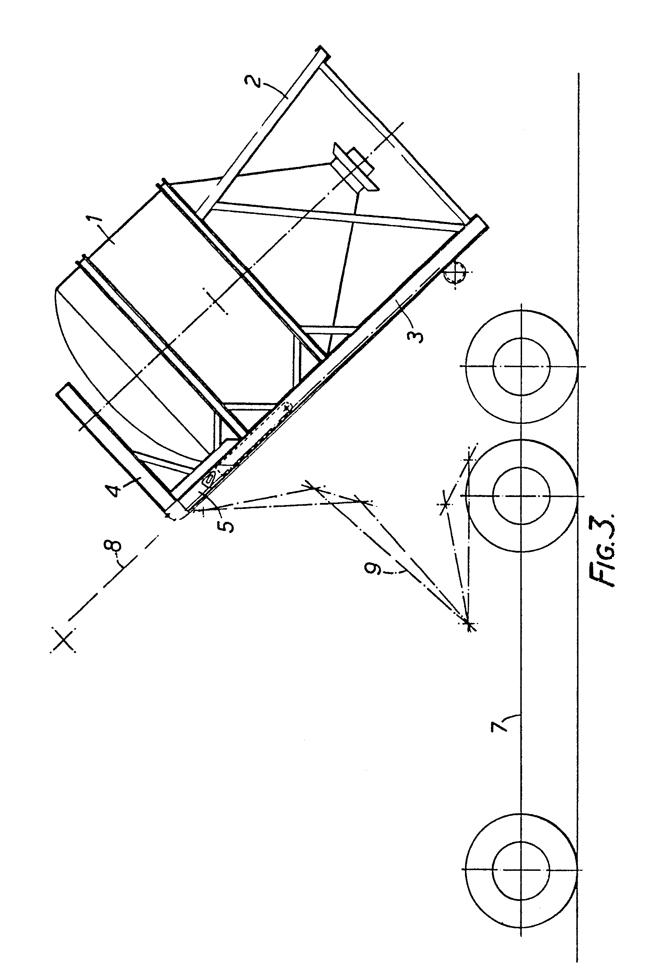

As is shown in Fig. 2 the loading bridge 8 can be set in an even steeper position and when the chain 10 is moved further upwards the unit 1, 2 to be transported will be tilted so that the frame beams 3 will bear on the rear end of the loading bridge 8. By a further upward movement of the freee end of the arm 5 with the aid of the chain 10 the unit to be transported will get in a position in which it is bearing completely on the loading bridge 8 as is shown in Fig. 3. Then the end remote form the pivotal shaft 6 bears on the support 4 and the arm 5 is in line with the frame beams 3. In this position the unit 1, 2 to be transported can be drawn up to the front end of the loading bridge, which can then be moved into the horizontal position suitable for road transport.

It will be obvious that for unloadind the transportable unit 1, 2 the steps described above can be carried out in the reverse order of succession.

When using the construction embodying the invention the hooklike coupling member provided at the end of the chain 10 can be readily connected or disconnected with and from the end of the pivotable arm of the unit 1, 2 to be transported by someone standing on the ground so that coupling and discoupling of the unit 1, 2 to be transported with the vehicle 7 will not give rise to difficulties. Furthermore there is no need for taking special precautions on the vehicle 7 to enable the transport of elongate units standing upright in normal use by means of said vehicle, whilst during loading or unloading the unit is tilted through an angle of 90°.

Although the invention is described herein with reference to a transportable unit formed by a silo, it will be obvious that other elongate units can be designed as claimed for enabling the transport of such units with the aid of the appropriate, conventional vehicle.

The figures used in the claims are only meant to explain more clearly the intention of the invention and are not supposed to be any restriction concerning the interpretation of the invention.

## Claims

1. Apparatus (1, 2) which stands upright during use and which is transported in a horizontal position on a vehicle (7) provided with:

a) a loading bridge (8) which is pivotable back and forth between a horizontal transport position and a tilted loading position about a pivot axis which is located near the rear end of the vehicle (7) and which extends horizontally and transversely of the longitudinal axis of the vehicle (7) and

b) a flexible, linear transmission means (10) for loading the apparatus (1, 2) onto the loading bridge (8) and for unloading the apparatus (1, 2) from the loading bridge (8), said apparatus comprising:

i) an elongated unit (1) having a longitudinal axis;

ii) a frame (2) supporting said elongated unit (1), said frame holding said elongated unit in an upright position during use of said elongated unit;

characterised in that said apparatus is provoded with (a) an arm (5)

having a first end and a second end,
the first end of said arm (5) being mounted on said frame (2) for pivotal movement about an axis (6) which is at least substantially horizontal when said elongated unit (1, 2) is in its upright position,
the second end of said arm (5) being provided with coupling means (11) for coupling said arm (5) to the flexible, linear force transmission means on the vehicle,
said arm (5) being pivotal back and forth through at least approximately 180° with respect to the elongated unit (1, 2) between a first position which said arm assumes when said elongated unit (1, 2) is in its upright position and a second position which said arm (5) assumes when said elongated unit (1, 2) is in its horizontal position and
said arm (5) being sized, shaped, and positioned, so that:

A) when said elongated unit (1, 2) is in its upright position and said arm (5) is in its first position, the second end of said arm is within 2 m of the ground;

B) as said elongated unit (1, 2) is moved from its upright position to its horizontal position, said arm (5) pivots through at least approximately 180° with respect to the elongated unit (1, 2) from its first position to its second position; and

C) when said elongated unit (1, 2) is in its horizontal position and said arm (5) is in its second position; the second end of said arm is located near the top of said elongated unit; and

b) a stop which prevents motion of said arm beyond its second position.

2. Apparatus as claimed in claim 1, characterized in, that a guide member (12) has been mounted on the second end of said arm (5) in a position spaced from said coupling means (11), said guide member serving to guide the flexible linear transmitting means (10) on the vehicle.

3. Apparatus as claimed in claim 1 or 2, characterized in, that the axis (6) about which said arm (5) pivots is located at about two-thirds of the overall height of said elongated unit (1, 2) above the ground when said elongated unit (1, 2) is in its upright position.

**Patentansprüche**

1. Vorrichtung (1, 2), welche während des Gebrauchs aufrecht steht und welche in einer horizontalen Position auf einem Fahrzeug (7) transportiert wird, mit:

a) einer Ladebrücke (8), welche zwischen einer horizontalen Transportstellung und einer geneigten Ladestellung um eine Schwenkachse zurück- und vorschwenkbar ist, welche nahe am rückwärtigen Ende des Fahrzeuges (7) angeordnet ist und sich horizontal und quer zur Längsachse des Fahrzeuges (7) erstreckt, und einer flexiblen, linearen Übertragungseinrichtung (10) zum Aufladen der Vorrichtung (1, 2), auf die Ladebrücke (8) und zum Abladen der Vorrichtung (1, 2) von der Ladebrücke (8), wobei die Vorrichtung aufweist:

i) eine längliche Einheit (1), die eine Längsachse besitzt;

ii) einen Rahmen (2), der die längliche Einheit (1) abstützt, wobei der Rahmen die längliche Einheit in einer aufrechten Position während des Gebrauches der länglichen Einheit hält;

dadurch gekennzeichnet, dass die Vorrichtung mit (a) einem Arm (5) ausgerüstet ist, welcher ein erstes und ein zweites Ende besitzt, dass das erste Ende des Armes (5) um die Achse (6) schwenkbar an dem Rahmen (2) befestigt ist, welche zumindest im wesentlichen horizontal ist, wenn die längliche Einheit (1, 2) sich in aufrechter Position befindet, dass das zweite Ende des Armes (5) mit Kupplungsmitteln (11) zum Kuppeln des Armes (5) an der flexiblen, linearen Kraftübertragungseinrichtung am Fahrzeug versehen ist, dass der Arm (5) um mindestens annähernd 180°, bezogen auf die längliche Einheit (1, 2), zwischen einer ersten Stellung, welche der Arm einnimmt, wenn die längliche Einheit (1, 2) sich in ihrer aufrechten Position befindet, und einer zweiten Stellung, in der sich der Arm (5) befindet, wenn die längliche Einheit (1, 2) in ihrer horizontalen Position ist, zurück- und vorschwenkbar ist,
und dass der erwähnte Arm (5) derart grössenmässig bemessen, gestaltet und angeordnet ist, dass:

A) bei aufrechter Position der länglichen Einheit (1, 2) und bei in seiner ersten Stellung befindlichem Arm (5) das zweite Ende des Armes sich innerhalb zwei Meter vom Boden befindet;

B) dann, wenn die längliche Einheit (1, 2) von ihrer aufrechten Position in ihre horizontale Position gebracht wird, der Arm (5) um mindestens 180°, bezogen auf die längliche Einheit (1, 2), von seiner ersten Stellung zu seiner zweiten Stellung schwenkt; und

C) sich der Arm (5), wenn sich die längliche Einheit (1, 2) in ihrer horizontalen Position und der Arm (5) in seiner zweiten Stellung befinden, sich nahe beim Höchsten der länglichen Einheit befindet;

b) und mit einem Anschlag, welcher eine Bewegung des Armes über seine zweite Stellung hinaus verhindert.

2. Vorrichtung nach Anspruch 1, dadurch gekennzeichnet, dass ein Führungsglied (12) am zweiten Ende des Armes (5) an einer von den Kupplungsmitteln (11) entfernten Stelle angeordnet ist, wobei das Führungsglied zur Führung der flexiblen linearen Übertragungseinrichtung (10) am Fahrzeug dient.

3. Vorrichtung nach den Ansprüchen 1 oder 2, dadurch gekennzeichnet, dass die Achse (6), um welche der Arm (5) schwenkt, etwa in zwei Drittel der Gesamthöhe der länglichen Einheit (1, 2) über dem Boden angeordnet ist, wenn sich die längliche Einheit (1, 2) in ihrer aufrechten Position befindet.

**Revendications**

1. Appareil (1, 2) qui se tient vertical pendant l'emploi et qui est transporté en position horizontale sur un véhicule (7) comportant:

a) un pont de chargement (8) qui est pivotable d'arrière en evant entre une position de transport horizontale et une position de chargement inclinée autour d'un axe de pivotement qui est placé près de l'extrémité arrière du véhicule (7) et qui s'étend horizontalement et transversalement à l'axe longitudinal de véhicule (7) et

b) des moyens de transmission flexibles linéaires (10) pour charger l'appareil (1, 2) sur le pont de chargement (8) et pour décharger l'appareil (1, 2) du pont de chargement (8), ledit appareil comprenant:

i) un ensemble allongé (1) présentant un axe longitudinal;

ii) un bâti (2) portant ledit ensemble allongé (1), ledit bâti maintenant ledit ensemble allongé dans une position verticale pendant l'emploi dudit ensemble allongé;

caractérisé en ce que ledit appareil comprend un

bras (5) présentant une première extrémité et une seconde extrémité,

la première extrémité dudit bras (5) étant montée sur ledit bâti (2) en vue d'un mouvement de pivotement autour d'un axe (6) qui est au moins sensiblement horizontal lorsque ledit ensemble allongé (1, 2) est dans sa position verticale,

la seconde extrémité dudit bras (5) comprenant des moyens de couplage (11) permettant d'accoupler ledit bras (5) aux moyens de transmission de force linéaires flexibles montés sur le véhicule,

ledit bras (5) pouvant pivoter d'arrière en avant d'au moins environ 180° par rapport à l'ensemble allongé (1, 2) entre une première position que ledit bras prend lorsque ledit ensemble allongé (1, 2) se trouve dans sa position verticale et une seconde position que ledit bras (5) prend lorsque ledit ensemble allongé (1, 2) se trouve dans sa position horizontale et

ledit bras (5) étant dimensionné, conformé et positionné de telle manière que:

A) lorsque ledit ensemble allongé (1, 2) est dans sa position verticale et que ledit bras (5) est dans sa première position, la seconde extrémité dudit bras est dans les 2 m du sol;

B) au fur et à mesure que ledit ensemble allongé (1, 2) est déplacé de sa position verticale à sa position horizontale, ledit bras (5) pivote d'au moins environ 180° par rapport à l'ensemble allongé (1, 2) depuis sa première position jusqu'à sa seconde position; et

C) lorsque ledit ensemble allongé (1, 2) est dans sa position horizontale et que ledit bras (5) est dans sa seconde position, la seconde extrémité dudit bras est placée près du sommet dudit ensemble allongé; et

D) une butée qui empêche le mouvement dudit bras au delà de sa seconde position.

2. Appareil comme revendiqué à la revendication 1, caractérisé en ce qu'un élément de guidage (12) est monté sur la seconde extrémité dudit bras (5) dans une position écartée desdits moyens de couplage (11), ledit élément de guidage servant à guider les moyens de transmission linéaires flexibles (10) montés sur le véhicule.

3. Appareil comme revendiqué à la revendication 1 ou 2, caractérisé en ce que l'axe (6) autour duquel le bras (5) pivote est placé environ aux deux tiers de la hauteur totale dudit ensemble allongé (1, 2) au-dessus du sol lorsque ledit ensemble allongé (1, 2) est dans sa position verticale.

Fig.I.

Fig.2.

Fig. 3.

0 151 432